(19) Europäisches Patentamt
European Patent Office
Office européen des brevets

(11) EP 1 876 204 A2

(12) EUROPEAN PATENT APPLICATION

(43) Date of publication:
**09.01.2008 Bulletin 2008/02**

(21) Application number: **07110197.6**

(22) Date of filing: **13.06.2007**

(51) Int Cl.:
***C08L 33/02*** *(2006.01)* ***C08K 5/19*** *(2006.01)*
***C08K 3/10*** *(2006.01)* ***C08L 63/00*** *(2006.01)*
***C09D 133/00*** *(2006.01)*

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **16.06.2006 JP 2006167469**
**05.10.2006 JP 2006273642**

(71) Applicant: **Sumitomo Chemical Company, Limited**
**Tokyo 104-8260 (JP)**

(72) Inventors:
- **Iyama, Hironobu**
  **Niihama-shi Ehime (JP)**
- **Heo, Jae-Kab**
  **Jeollabuk-Do (KR)**

(74) Representative: **Vossius & Partner**
**Siebertstrasse 4**
**81675 München (DE)**

# (54) Antistatic Agent Composition

(57) The present invention provides an antistatic agent composition which attains sufficient antistatic properties and also has antistatic properties having excellent durability against high temperature, high humidity and ultraviolet irradiation.

The antistatic agent composition of the present invention comprises a water-soluble resin having a carboxyl group, a crosslinking agent having a functional group capable of reacting with a carboxyl group, and an ammonium salt having a specific chemical structure. One or more crosslinking agents selected from a carbodiimide resin, an epoxy resin, an isocyanate resin and a zirconium salt are preferably used as the crosslinking agent. At least one kind of a water-soluble resin selected from the group consisting of polyacrylic acid and an acrylic acid-methacrylic acid copolymer is preferably used as the water-soluble resin.

EP 1 876 204 A2

## Description

The present invention relates to an antistatic agent composition which has sufficient antistatic properties and also has antistatic properties having excellent durability against high temperature, high humidity and ultraviolet irradiation.

In the modern society, a plastic material is used for various purposes, but had such a problem that the plastic material is likely to be charged because it is an insulator, and dirt and dust adhere onto the surface through charging and thus design properties deteriorate.

As a method to solve such a problem, there is known a method comprising coating an antistatic agent containing a surfactant as a main component on the surface of a plastic material, thereby preventing charging of the plastic material. However, such a method comprising merely coating the antistatic agent on the surface had such a problem that an antistatic effect remarkably deteriorates by rubbing or water-wiping the surface of the plastic material.

Therefore, as a method for improving durability of such an antistatic effect, there is proposed a method comprising coating an antistatic agent composition containing a copolymer, which is obtained by copolymerizing a monomer composition containing an acrylic monomer having a quaternary ammonium salt group and an acrylic monomer having a carboxyl group, and a polycarbodiimide-based resin on the surface of a plastic material (see Japanese Unexamined Patent Publication (Kokai) No. 2001-152077).

There is also known an antistatic film comprising a substrate composed of a polyester film and a conductive layer formed on one surface of the substrate, the conductive layer containing a reaction product of a resin having plural carboxylic acid groups in the molecule and a compound having plural carbodiimide structures in the molecule, and a conductive material which exhibits conductivity through electron conductivity (see US 2006/0003274 A1). Examples of the conductive material, which exhibits conductivity through electron conduction, include a metal oxide such as tin oxide, indium oxide, zinc oxide or titanium oxide, and a conductive polymer such as polyaniline, polypyrrole or polythiophene.

However, the technique of Japanese Unexamined Patent Publication (Kokai) No. 2001-152077 had such a problem that an acrylic monomer having a quaternary ammonium salt group is not always easily available.

Also, the technique of US 2006/0003274 A1 had such a problem that it is difficult to uniformly coat because metal oxide or conductive polymer listed as the conductive material is not water soluble.

In the light of such a technical background an object of the present invention is to provide an antistatic agent composition which attains sufficient antistatic properties and also has antistatic properties having excellent durability against high temperature, high humidity and ultraviolet irradiation.

To achieve the above object, the present invention provides the following means.

[1] An antistatic agent composition comprising:

a water-soluble resin having a carboxyl group,
a crosslinking agent having a functional group capable of reacting with a carboxyl group, and
an ammonium salt represented by the following general formula (I):

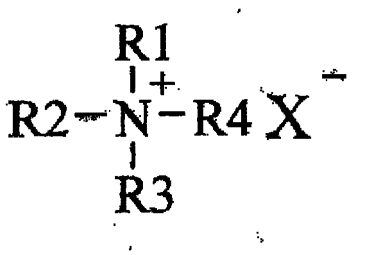

··· (I)

wherein R1 to R4 each independently represents a hydrogen atom, a linear alkyl group having 1 to 22 carbon atoms, a branched alkyl group having 3 to 22 carbon atoms, of $-CH_2Ph$, and $X^-$ represents halide ion, hydroxide ion, sulfate ion, phosphate ion, an ion of the following general formula (II), or an ion of the following general formula (III):

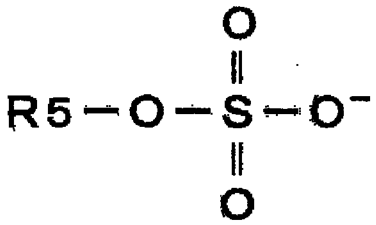

··· (II)

wherein R5 each independently represents a hydrogen atom, a linear alkyl group having 1 to 22 carbon atoms, a branched alkyl group having 3 to 22 carbon atoms, or $-CH_2Ph$, and

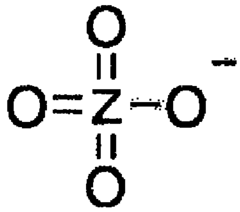

··· (III)

wherein Z represents a halogen.

[2] The antistatic agent composition according to the above paragraph 1, wherein one or more kinds of crosslinking agents selected from a carbodiimide resin,
an epoxy resin, an isocyanate resin and a zirconium salt are used as the crosslinking agent.

[3] The antistatic agent composition according to the above paragraph 1 or 2, wherein a water-soluble resin obtained by polymerizing a polymerization component containing at least one kind of a monomer component selected from acrylic acid and methacrylic acid, a water-soluble resin modified with a dihydric or higher polyhydric carboxylic acid, or a water-soluble resin modified with a dihydric or higher polyhydric carboxylic anhydride is used as the water-soluble resin.

[4] The antistatic agent composition according to the above paragraph 1 or 2, wherein at least one kind of a water-soluble resin selected from polyacrylic acid and an acrylic acid-methacrylic acid copolymer is used as the water-soluble resin.

[5] The antistatic agent composition according to any one of the above paragraphs 1 to 4, wherein an ammonium salt represented by the following general formula (IV) is used as the ammonium salt:

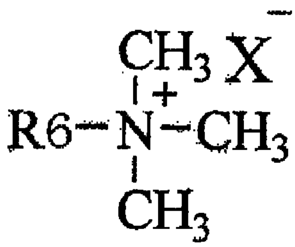

··· (IV)

wherein R6 represents a linear alkyl group having 4 to 22 carbon atoms, a branched alkyl group having 4 to 22 carbon atoms, or $-CH_2Ph$, and $X^-$ represents halide ion.

[6] The antistatic agent composition according to any one of the above paragraphs 1 to 5, wherein the following relational expression is established:

$$Ma/Mb > 1$$

where "Ma" represents a mol number of a carboxyl group in the water-soluble resin, and "Mb" represents a mol number of the ammonium salt.

[7] The antistatic agent composition according to any one of the above paragraphs 1 to 6, wherein the following relational expression is established:

$$0 \leq (Ma - Mb)/Mc \leq 6$$

where "Ma" represents mol number of a carboxyl group in the water-soluble resin, "Mb" represents a mol number of the ammonium salt, and "Mc" represents a mol number of a functional group capable of reacting with a carboxyl group in the crosslinking agent.

[8] A plastic material, the surface of which is coated with the antistatic agent composition according to any one of the above paragraphs 1 to 7.

[9] A plastic optical member, the surface of which is coated with the antistatic agent composition according to any one of the above paragraph 1 to 7. The plastic optical member includes, for example, light diffusion plate, light guide plate, protective cover of display, brightness enhancing film, and liquid crystal display section.

[10] A backlight comprising the plastic optical member according to the above paragraph 9.

[11] An image display apparatus comprising the plastic optical member according to the above paragraph 9.

In the invention of [1], since the antistatic agent composition contains an ammonium salt represented by the general formula (I) as an antistatic agent, sufficient antistatic properties can be obtained. Furthermore, the antistatic agent composition contains, in addition to a water-soluble resin having a carboxyl group as a binder, a crosslinking agent having a functional group capable of reacting with a carboxyl group, if this antistatic agent composition is coated on the surface of a plastic material (molded article, etc.), the water-soluble resin reacts with the crosslinking agent to form a crosslinked structure, thus obtaining such an advantageous effect that an antistatic effect is excellent in durability under high temperature condition, high humidity condition and ultraviolet irradiation condition. That is, there is provided an antistatic agent composition which has antistatic properties having excellent durability against high temperature, high humidity and ultraviolet irradiation. For example, an antistatic film having excellent durability can be formed by coating this antistatic agent composition on the surface of a plastic material (molded article, etc.). Also, the antistatic agent composition of the present invention is not only excellent in durability of the antistatic effect, but also excellent in color fastness, and therefore can be widely applied to a plastic member to be used for a flat panel display of a liquid crystal display, and thus a product having excellent design properties can be provided.

In the invention of [2], since one or more kinds of crosslinking agents selected from a carbodiimide resin, an epoxy resin, an isocyanate resin and a zirconium salt are used as the crosslinking agent, there is such an advantage that sufficient storage stability of a solution (solution or dispersion) of the antistatic agent composition can be ensured.

In the invention of [3], since a water-soluble resin obtained by polymerizing a polymerization component containing at least one kind of a monomer component selected from acrylic acid and methacrylic acid, a water-soluble resin modified with a dihydric or higher polyhydric carboxylic acid, or a water-soluble resin modified with a dihydric or higher polyhydric carboxylic anhydride is used as the water-soluble resin, durability of the antistatic effect under high temperature condition, high humidity condition and ultraviolet irradiation condition can be further improved.

In the invention of [4], since at least one kind of a water-soluble resin selected from polyacrylic acid and an acrylic acid-methacrylic acid copolymer is used as the water-soluble resin, durability of the antistatic effect under high temperature condition, high humidity condition and ultraviolet irradiation condition can be further improved.

In the invention of [5], since an ammonium salt represented by the general formula (IV) is used as the ammonium salt, antistatic properties can be further improved.

In the invention of [6], since relational expression $Ma/Mb > 1$ is established, durability of the antistatic effect under high temperature condition, high humidity condition and ultraviolet irradiation condition can be further improved.

In the invention of [7], since a relational expression $0 \leq (Ma - Mb)/Mc \leq 6$ is established, durability of the antistatic effect under high temperature condition, high humidity condition and ultraviolet irradiation condition can be further improved while sufficiently suppressing the proportion of the unreacted crosslinking agent remained in the composition.

In the plastic material according to the invention of [8], sufficient antistatic properties is obtained and also durability of the antistatic effect under high temperature condition, high humidity condition and ultraviolet irradiation condition is excellent.

In the plastic optical member according to the invention of [9], sufficient antistatic properties is obtained and also durability of the antistatic effect under high temperature condition, high humidity condition and ultraviolet irradiation condition is excellent.

In the backlight according to the invention of [10], since the plastic optical member provide sufficient antistatic properties and also durability of the antistatic effect under high temperature condition, high humidity condition and

ultraviolet irradiation condition is excellent, dirt and dust are less likely to adhere onto the optical member, and thus stable optical properties and design properties can be ensured for a long period.

In the image display apparatus according to the invention of [11], since the plastic optical member provide sufficient antistatic properties and also durability of the antistatic effect under high temperature condition, high humidity condition and ultraviolet irradiation condition is excellent, dirt and dust are less likely to adhere onto the optical member, and thus stable optical properties and design properties can be ensured for a long period.

The antistatic agent composition of the present invention will now be described in detail.

The water-soluble resin (hereinafter sometimes referred to as a "component (A)") constituting the antistatic agent composition of the present invention is a water-soluble resin having a carboxyl group. The water-soluble resin having a carboxyl group is not specifically limited and includes, for example, a polyester-based resin, a urethane-based resin and an acrylic resin. It is preferable to use a water-soluble resin obtained by polymerizing a polymerization component containing at least one kind of a monomer component selected from acrylic acid and methacrylic acid, a water-soluble resin modified with a dihydric or higher polyhydric carboxylic acid, or a water-soluble resin modified with a dihydric or higher polyhydric carboxylic anhydride as the water-soluble resin. Polyacrylic acid and/or an acrylic acid-methacrylic acid copolymer are particularly preferable. It is possible to use, as the water-soluble resin, those which are commercially available widely. For example, polyacrylic acid and an acrylic acid-methacrylic acid copolymer are commercially available from NIHON JUNYAKU Co., Ltd. and NIPPON SHOKUBAI CO., LTD.

A molecular weight of the water-soluble resin is not specifically limited as long as it is a molecular weight which can be handled as an aqueous solution or an aqueous dispersion, and a weight average molecular weight of the water-soluble resin is preferably from 10,000 to 1,000,000. When the weight average molecular weight is 10,000 or more, durability of the antistatic properties can be sufficiently ensured. When the weight average molecular weight is 1,000,000 or less, stability of a solution (solution or dispersion) of the antistatic agent composition can be improved.

The ammonium salt (hereinafter sometimes referred to as a "component (B)") constituting the antistatic agent composition of the present invention is an ammonium salt represented by the following general formula (I):

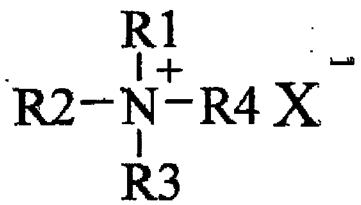

...(I)

wherein R1 to R4 each independently represents a hydrogen atom, a linear alkyl group having 1 to 22 carbon atoms, a branched alkyl group having 3 to 22 carbon atoms, of $-CH_2Ph$, and $X^-$ represents halide ion, hydroxide ion, sulfate ion, phosphate ion, an ion of the following general formula (II), or an ion of the following general formula (III),

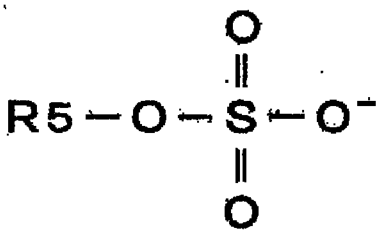

...(II)

wherein R5 each independently represents a hydrogen atom, a linear alkyl group having 1 to 22 carbon atoms, a branched alkyl group having 3 to 22 carbon atoms, or $-CH_2Ph$, and

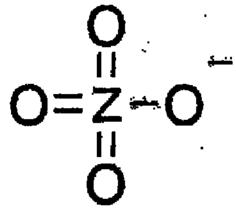

··· (III)

wherein Z represents a halogen.

The ammonium salt represented by the general formula (I) is not specifically limited and includes, for example, trimethylalkylamononium halides such as trimethyloctadecylammonium chloride, trimethylhexadecylammonium chloride, trimethyltetradecylammonium chloride, trimethyldodecylammonium chloride, trimethyloctylammonium chloride and trimethylbenzylammonium chloride; dimethyldialkylammonium halides such as dimethyldioctadecylammonium chloride, dimethyldihexadecylammonium chloride, dimethylditetradecylammonium chloride, dimethyldidodecylammonium chloride and dimethyldioctylammonium chloride; and ammonium salts of various amines derived from natural fats and oils such as coconut oil and beef tallow.

A counter anion of ammonium ion, namely $X^-$, includes, for example, halide ion "$Cl^-$, $Br^-$, etc.", hydroxide ion "$OH^-$", sulfate ion "(1/2) ($SO_4^{2-}$)", phosphate ion "(1/3) ($PO_4^{3-}$)" and ethylsulfate ion "$C_2H_5SO_4^-$". Among these ions, chloride ion "$Cl^-$" and ethylsulfate ion are preferable.

It is possible to use, as the ammonium salt, those which are commercially available widely. For example, these ammonium salts are commercially available from manufacturers such as Kao Corporation and Lion Corporation.

The amount of the ammonium salt to be added is not specifically limited, but is preferably set so as to satisfy a relational expression Ma/Mb > 1 where "Ma" denotes a mol number of a carboxyl group in the water-soluble resin, and "Mb" denotes a mol number of the ammonium salt. It is more preferable to set the amount of the ammonium salt so as to satisfy a relational expression 1 < Ma/Mb < 10. When the relational expression 1 < Ma/Mb is satisfied, durability of the antistatic effect under high temperature condition, high humidity condition and ultraviolet irradiation condition can be improved. When the relational expression Ma/Mb < 10 is satisfied, surface resistivity can be sufficiently decreased and therefore a sufficient antistatic effect can be exerted.

The crosslinking agent (hereinafter sometimes referred to as a "component (C)") constituting the antistatic agent composition of the present invention is a crosslinking agent having a functional group capable of reacting with a carboxyl group. The crosslinking agent having a functional group capable of reacting with a carboxyl group is not specifically limited as long as it is a compound or a resin, which has a polyhydric functional group capable of reacting with a carboxyl group to form an ionic bond or a covalent bond, and examples thereof include polyhydric alcohols, polyhydric phenols, a phenol resin, a polyhydric epoxy compound, an epoxy resin, a polyhydric isocyanate, an isocyanate resin, a polyhydric carbodiimide compound, a polycarbodiimide resin, a polyvalent metal salt, and a metal complex having polyvalent coordination sites. It is preferable to use one or more kinds of crosslinking agents selected from a carbodiimide resin, an epoxy resin, an isocyanate resin and a zirconium salt. In this case, there is such an advantage that storage stability of a solution (solution or dispersion) of the antistatic agent composition can be sufficiently ensured. A carbodiimide resin is particularly preferable. Commercially available products of the carbodiimide resin include, for example, "CARBODILITE" (trade name) (aqueous solution or aqueous dispersion) manufactured by Nisshinbo Industries, Inc.

The amount of the crosslinking agent to be added is net specifically limited, but is preferably set so as to satisfy a relational expression 0 ≤ (Ma - Mb)/Mc ≤ 6 where "Ma" denotes mol number of a carboxyl group in the water-soluble resin, "Mb" denotes a mol number of the ammonium salt, and "Mc" denotes a mol number of a functional group capable of reacting with a carboxyl group in the crosslinking agent. When the relational expression 0 ≤ (Ma - Mb)/Mc is satisfied, durability of the antistatic of feet under high temperature condition, high humidity condition and ultraviolet irradiation condition can be improved. When the relational expression (Ma - Mb)/Mc ≤ 6 is satisfied, the proportion of the unreacted crosslinking agent remained in the composition can be sufficiently suppressed and it is economical.

The antistatic agent composition of the present invention may be mixed with a solvent, in addition to essential three components such as components (A), (B) and (C). Examples of the solvent include, in addition to water, alcohols such as methanol, ethanol and isopropyl alcohol; and aprotic polar solvents such as γ-butyrolactone and N-methylpyrrolidinone, and the antistatic agent composition is dissolved or dispersed in these solvents.

To the antistatic agent composition of the preset invention, a catalyst may be added so as to accelerate the reaction between a carboxyl group of the water-soluble resin and a functional group (functional group capable of roasting with the carboxyl group) of the crosslinking agent as long as the effect of the present invention is not adversely affected.

Also, the antistatic agent composition of the present invention may contain a heat stabilizer, an antioxidant,

weatherproofing agent, an ultraviolet absorber, a photostabilizer, a diffusing agent, a filler and a coloring agent, if necessary. It is also possible to add conductive particles (particles made of antimony-based oxide, indium-based oxide, tin-based oxide, etc.), conductive polymer, lithium perchlorate, carbon nano-tube and ionic liquid so as to further improve the antistatic properties.

The method of coating the antistatic agent composition of the present invention on a plastic material such as optical member is not specifically limited and includes, for example, a method of coating the antistatic agent composition of the present invention (which preferably contains the above solvent) on the surface of a. plastic material such as optical member using a conventional coating method, for example, a roll coating method, a gravure roll coating method, a reverse roll coating method or a wire bar coating method. Also, it is possible to employ a method of spraying a solution (solution or dispersion) of the antistatic agent composition of the present invention over the surface of a plastic material using a spray, or a method of dipping a plastic material in a solution (solution or dispersion) of the antistatic agent composition of the present invention. In case foaming or coating unevenness called "orange peel" occurs during coating, or "stripe une venness" is caused by foaming of a solution (solution or dispersion) of the antistatic agent composition, a leveling agent or a defoamer is preferably added, if necessary.

In case the solution (solution or dispersion) of the antistatic agent composition is prepared, the solid content in the solution or dispersion is usually from 0.5 to 30% by mass, preferably from 3 to 20% by mass, and more preferably from 5 to 15% by mass, in terms of a non-volatile component.

Drying conditions after coating on the plastic material are not specifically limited as long as the solvent (water, alcohol, aprotic polar solvent, etc.) can be removed under the conditions, and the drying temperature is usually from 20 to 100°C, and preferably from 50 to 80°C. The drying time is optionally set according to balance with the drying temperature, but is usually from 30 seconds to 30 minutes, and preferably from 1 to 10 minutes.

In case the antistatic agent composition of the present invention is coated on a plastic material such as optical member, an antistatic layer formed by coating maintains sufficient durability (durability of the antistatic effect under high temperature condition, high humidity condition, ultraviolet irradiation condition, etc.) when drying after coating has been completed. It is possible to impart higher durability by the crosslinking reaction between a carboxyl group of the water-soluble resin (component (A)) and the crosslinking agent (component (C)). That is, it is possible to impart higher durability by subjecting to a heat treatment after drying or simultaneously performing drying and the crosslinking reaction through a drying treatment (heat treatment) at high temperature in the same process. The conditions for heat treatment are set according to heat resistance of the plastic material, and the heat treatment temperature is usually from 50 to 120°C, and preferably from 60 to 90°C. The heat treatment time is optionally set according to balance with the heat treatment temperature, but is usually from 1 to 60 minutes, and preferably from 10 to 30 minutes. With respect to the heat treatment for crosslinking, it is possible to employ the exposure temperature under conditions for use of the plastic material. For example, in case of the application of an illumination cover, it is also possible to use heat generated when the illumination is turned on.

A plastic optical member, the surface of which is coated with the antistatic agent composition of the present invention, can attain sufficient antistatic properties and is also excellent in durability of the antistatic effect under high temperature condition, high humidity condition, ultraviolet irradiation condition, etc. Therefore, in case of a backlight and an image display apparatus, each comprising an optical member, dirt and dust are less likely to adhere onto a plastic optical member, and thus stable optical properties and design properties can be ensured for a long period. The plastic optical member includes, for example, light diffusion plate, light guide plate, protective cover of display, brightness enhancing film for improving brightness of display screen, such as prism film, and liquid crystal display section.

Examples

Specific examples of the present invention will now be described, but the present invention is not limited to these

examples.

<Raw Material of Antistatic Agent Composition>

Component (A)

A1: Aqueous polyacrylic acid solution (aqueous polyacrylic acid solution manufactured by Aldrich Co., solid content: about 35% by mass, solid content carboxyl group equivalent: about 72 g/eq)

A2: Aqueous polyacrylic acid solution ("JURYMER AC10L" manufactured by NIHON JUNYAKU Co., Ltd., solid content: about 40% by mass, solid content carboxyl group equivalent: about 72 g/eq)
A3: Aqueous acrylic acid-methacrylic acid copolymer solution ("JURYMER AC20L" manufactured by NIHON JUNYAKU Co., Ltd., solid content: about 40% by mass, solid content carboxyl group equivalent: about 76 g/eq)
A4: Polyethylene glycol (PEG2000)
A5: Aqueous acrylic acid-methacrylic acid copolymer solution ("JURYMER AC20H" manufactured by NIHON JUNYAKU Co., Ltd., solid content: about 20% by mass, solid content carboxyl group equivalent: about 76 g/eq)

Component (B)

B1: Aqueous trimethyloctadecylammonium chloride solution ("Arquad T-28" manufactured by Lion Akzo Co., Ltd., solid content: about 28% by mass, molecular weight: 348)

Component (C)

C1: Aqueous carbodiimide resin solution ("CARBODILITE V-02" manufactured by Nisshinbo Industries, Inc., solid content: about 40% by mass, solid content carbodiimide equivalent: about 600 g/eq)
C2: Aqueous carbodiimide resin dispersion ("CARBODILITE E-03" manufactured by Nisshinbo Industries, Inc., solid content: about 40% by mass, solid content carbodiimide equivalent: about 370 g/eq)
C3: Aqueous carbodiimide resin solution ("CARBODILITE SV-02" manufactured by Nisshinbo Industries, Inc., solid content: about 40% by mass, solid content carbodiimide equivalent: about 430 g/eq)

<Production of Plastic Plate (Plastic Optical Member)>

8 Parts by mass of a master batch obtained by mixing 46 parts by mass of a polystyrene resin ("TOYO STYROL HRM40" manufactured by TOYO-STYRENE CO., LTD., MFR = 0.9 to 1.3 g/10 min), 40 parts by mass of fine crosslinked acrylic particles ("SUMIPEX XC1A" manufactured by Sumitomo Chemical Co., Ltd.), 4 parts by mass of fine silicone-based particles ("DY33-719" manufactured by Dow Corning Toray Co., Ltd.), 2 parts by mass of an ultraviolet absorber ("Viosorb 520" manufactured by KYODO CHEMICAL CO., LTD.; (2-(2H-benzotriazol-2-yl)-p-cresol)) and 2 parts by mass of a processing stabilizer ("Sumilizer GP" manufactured by Sumitomo Chemical Co., Ltd.) was dry-blended with 95 parts by mass of a polystyrene resin ("TOYO STYROL HRM40" manufactured by TOYO-STYRENE CO., LTD., MFR = 0.9 to 1.3 g/10 min) to obtain a resin composition for intermediate layer. The resulting resin composition for intermediate layer was supplied to an extruder having a screw diameter of 40 mm and melted at 200 to 235°C in the state where the vacuum degree of a Vent portion is maintained at 5.3 kPa. Separately, to an auxiliary extruder having a screw diameter of 20 mm, a compound (resin composition for coat layer) containing 75.8 parts by mass of a methyl methacrylate-styrene copolymer ("ESTYRENE MS200NT" manufactured by Nippon Steel Chemical Co., Ltd., MFR = 1.3 to 1.9 g/10 min), 23 parts by mass of fine crosslinked acrylic particles ("SUMIPEX XC1A" manufactured by Sumitomo Chemical Co., Ltd.), 0.2 parts by mass of a processing stabilizer ("Sumilizer GP" manufactured by Sumitomo Chemical Co., Ltd.) and 1 part by mass of an ultraviolet absorber ("Adkstab LA-31" manufactured by Adeka Corporation; (2,2'-methylenebis[4-(1,1,3,3-tetramethylbutyl)-6-[2H-benzotriazol-2-yl]phenol])) was supplied and melted at an auxiliary extruder temperature of 190 to 230°C in the state where the vacuum degree of a vent portion is maintained at 21.3 kPa. Then, these resin compositions were co-extruded through a feed block and a T-die at a T-die temperature of 245 to 250°C to obtain a plastic plate (multi-layered light diffusion plate) composed of a three-layered laminate (thickness: coat layer/intermediate layer/coat layer= about 50 μm/1.9 mm/ about 50 μm, width: about 220 mm).

<Example 1>

2.0 Parts by mass of a component A1 (aqueous polyacrylic acid solution manufactured by Aldrich Co.) was diluted with 79.5 parts by mass of ion-exchange water and 10.0 parts by mass of a component B1 (aqueous trimethyloctadecylammonium chloride solution) was added, followed by mixing. Furthermore, 8.5 parts by mass of a component C2 (aqueous carbodiimide resin dispersion) was added, followed by mixing to obtain an antistatic agent composition.
A nonwoven fabric was impregnated with the resulting antistatic agent composition and the surface of the plastic plate (multi-layered light diffusion plate) was wiped with the nonwoven fabric, thereby coating the antistatic agent composition on the surface of the plastic plate, followed by drying to form an antistatic film on the surface. Furthermore,

the plastic plate was subjected to a heat treatment (heat treatment for crosslinking) at 80°C for 20 minutes to obtain a plastic material (plastic optical member), the surface of which is coated with the antistatic agent composition.

<Examples 2 to 5>

In the same manner as in Example 1, except that the composition was replaced by each composition shown in Table 1, antistatic agent compositions were obtained. In the same manner as in Example 1, plastic materials (plastic optical members), the surface of which are coated with the antistatic agent composition, were obtained.

Table 1

| | | | Example 1 | Example 2 | Example 3 | Example 4 | Example 5 |
|---|---|---|---|---|---|---|---|
| Composition/Parts by mass | Component (A) | A1: Aqueous polyacrylic acid solution | 2.0 | 2.0 | 2.0 | 3.0 | 2.1 |
| | | A4: PEG2000 | - | - | - | - | - |
| | Component (B) | B1: Aqueous trimethyloctadecylammonium chloride solution | 10.0 | 10.0 | 10.0 | 10.0 | 18.1 |
| | Component (C) | C1: Aqueous carbodiimide resin solution | - | - | 13.8 | 21.0 | 5.3 |
| | | C2: Aqueous carbodiimide resin solution | 8.5 | - | - | - | - |
| | | C3: Aqueous carbodiimide resin solution | - | 10.0 | - | - | - |
| | Ion-exchange water | | 79.5 | 78.0 | 74.2 | 66.0 | 74.5 |
| Solid content of antistatic agent composition (by calculation) (% by mass) | | | 6.9 | 7.5 | 9.0 | 12.3 | 7.8 |
| Ma/Mb | | | 1.2 | 1.2 | 1.2 | 1.8 | 0.7 |
| (Ma- Mb)/Mc | | | 0.2 | 0.2 | 0.2 | 0.5 | -3.1 |
| Surface resistivity (Ω) | | Initial | $7.4 \times 10^{10}$ | $7.4 \times 10^{10}$ | $1.0 \times 10^{11}$ | $9.6 \times 10^{10}$ | $3.7 \times 10^{10}$ |
| | | After water dipping treatment | $5.0 \times 10^{11}$ | $5.7 \times 10^{11}$ | $3.1 \times 10^{11}$ | $7.7 \times 10^{11}$ | $1.1 \times 10^{11}$ |
| Surface resistivity after water dipping treatment/Initial surface resistivity | | | 6.8 | 7.7 | 3.1 | 8.0 | 3.0 |

<Examples 6 to 9 and Comparative Example 1>

In the same manner as in Example 1, except that the composition was replaced by each composition shown in Table 2, antistatic agent compositions were obtained. In the same manner as in Example 1, plastic materials (plastic optical members), the surface of which are coated with the antistatic agent composition, were obtained.

Table 2

| | | | Example 6 | Example 7 | Example 8 | Example 9 | Comparative Example 1 |
|---|---|---|---|---|---|---|---|
| Composition/Parts by mass | Component (A) | A1: Aqueous polyacrylic acid solution | 4.8 | 2.9 | 1.5 | 0.6 | - |
| | | A4: PEG2000 | - | - | - | - | 0.9 |
| | Component (B) | B1: Aqueous trimethyloctadecylammonium chloride solution | 18.1 | 18.1 | 18.1 | 18.1 | 8.9 |
| | Component (C) | C1: Aqueous carbodiimide resin solution | 2.6 | 4.2 | 5.4 | 6.2 | - |
| | | C2: Aqueous carbodiimide resin dispersion | - | - | - | - | - |
| | | C3: Aqueous carbodiimide resin solution | - | - | - | - | - |
| | Ion-exchange water | | 74.5 | 74.8 | 75.0 | 75.1 | 90.2 |
| Solid content of antistatic agent composition (by calculation) by mass) | | | 7.8 | 7.8 | 7.8 | 7.8 | 3.4 |
| Ma/Mb | | | 1.6 | 1.0 | 0.5 | 0.2 | - |
| (Ma-Mb)/Mc | | | 5.1 | -0.2 | -2.0 | -2.8 | - |
| Surface resistivity (Ω) | | Initial | $1.0 \times 10^{10}$ | $1.5 \times 10^{9}$ | $2.6 \times 10^{8}$ | $6.0 \times 10^{7}$ | $1.3 \times 10^{2}$ |
| | | After water dipping treatment | $6.7 \times 10^{10}$ | $3.6 \times 10^{10}$ | $1.7 \times 10^{10}$ | $1.1 \times 10^{10}$ | $2.1 \times 10^{15}$ |
| Surface resistivity after water dipping treatment/Initial surface resistivity | | | 6.7 | 24 | 65 | 1.83 | $1.6 \times 10^{6}$ |

<Example 10>

4.3 Parts by mass a component A1 (aqueous polyacrylic acid solution manufactured by Aldrich Co.) was diluted with 74.6 parts by mass of ion-exchange water and 18.1 parts by mass of a component B1 (aqueous trimethyloctadecylammonium chloride solution) was added, followed by mixing. Furthermore, 3.0 parts by mass of a component C1 (aqueous carbodiimide resin solution) was added, followed by mixing to obtain an antistatic agent composition.

Using a manual type roll laminator LS950 manufactured by 3M Co., the resulting antistatic agent composition was coated on the surface of the plastic plate (multi-layered light, diffusion plate) and dried to form an antistatic film and then the plastic plate was subjected to a heat treatment (heat treatment for crosslinking) at 80°C for 20 minutes to obtain a plastic material (plastic optical member), the surface of which is coated with the antistatic agent composition.

<Examples 11 to 13>

In the same manner as in example 10, except that the composition was replaced by each composition shown in Table 3, antistatic agent compositions were obtained. In the same manner as in Example 10, plastic materials (plastic optical members), the surface of which are coated with the antistatic agent composition were obtained.

Table 3

| | | | Example 10 | Example 11 | Example 12 | Example 13 |
|---|---|---|---|---|---|---|
| Composition/ Parts by mass | Component (A) | A1: Aqueous polyacrylic acid solution | 4.3 | - | - | - |
| | | A2: Aqueous polyacrylic acid solution | - | 3.6 | 2.9 | 1.4 |
| | | A3: Aqueous acrylic acid-methacrylic acid copolymer solution | - | - | - | - |
| | Component (B) | B1: Aqueous trimethyloctadecylammonium chloride solution | 18.1 | 18.4 | 20.3 | 24.2 |
| | Component (C) | C1: Aqueous carbodiimide resin solution | 3.0 | 3.0 | 2.4 | 1.1 |
| | Ion-exchange water | | 74.6 | 75.0 | 74.4 | 73.3 |
| Solid content of antistatic agent composition (by calculation) (% by mass) | | | 7.8 | 7.8 | 7.8 | 7.8 |
| Ma/Mc | | | 1.4 | 1.4 | 1.0 | 0.4 |
| (Ma - Mb)/Mc | | | 3.2 | 2.6 | -0.1 | -15.9 |
| Surface resistivity (Ω) | | Initial | 1.8 x $10^{10}$ | 5.7 x $10^{10}$ | $3.6 \times 10^{11}$ | $4.3 \times 10^{2}$ |
| | | After water dipping treatment | $6.6 \times 10^{10}$ | $2.3 \times 10^{11}$ | $1.3 \times 10^{11}$ | $1.5 \times 10^{10}$ |
| | | After water wiping treatment | $3.9 \times 10^{12}$ | $1.6 \times 10^{13}$ | $6.0 \times 10^{15}$ | $2.4 \times 10^{16}$ |
| Surface resistivity after water dipping treatment/Initial surface resistivity | | | 3.7 | 4.0 | 3.6 | 3.5 |
| Surface resistivity after water wiping treatment/Initial surface resistivity | | | 217 | 280 | $1.7 \times 10^{5}$ | $5.5 \times 10^{6}$ |

<Examples 14 to 20>

In the same manner as in Example 10, except that the composition was replaced by each composition shown in Table 4, antistatic agent compositions were obtained. In the same manner as in Example 10, plastic materials (plastic optical members), the surface of which are coated with the antistatic agent composition, were obtained.

Table 4

| | | | Example 14 | Example 15 | Example 16 | Example 17 |
|---|---|---|---|---|---|---|
| Composition/Parts by mass | Component (A) | A1: Aqueous polyacrylic acid solution | - | - | - | - |
| | | A2: Aqueous polyacrylic acid solution | - | - | - | - |
| | | A3: Aqueous acrylic acid-methacrylic acid copolymer solution | 3.6 | 2.9 | 1.4 | - |
| | | A5: Aqueous acrylic acid-methacrylic acid copolymer solution | - | - | - | 5.9 |
| | Component (B) | B1: Aqueous trimethyloctadecylammonium chloride solution | 18.4 | 20.3 | 24.2 | 18.1 |
| | Component (C) | C1: Aqueous carbodiimide resin solution | 3.0 | 2.4 | 1.1 | 3.8 |
| | Ion-exchange water | | 75.0 | 74.4 | 73.3 | 72.2 |
| Solid content of antistatic agent composition (by calculation)(% by mass) | | | 7.8 | 7.8 | 7.8 | 7.8 |
| Ma/Mb | | | 1.4 | 1.0 | 0.4 | 1.1 |
| (Ma - Mb)/Mc | | | 2.1 | -0.7 | -16.5 | 0.4 |
| Surface resistivity (Ω) | Initial | | $4.2 \times 10^{10}$ | $2.5 \times 10^{10}$ | $2.9 \times 10^{9}$ | $9.8 \times 10^{10}$ |
| | After water dipping treatment | | $2.3 \times 10^{11}$ | $1.2 \times 10^{11}$ | $4.9 \times 10^{10}$ | $1.4 \times 10^{12}$ |
| | After water wiping treatment | | $5.0 \times 10^{13}$ | $4.0 \times 10^{14}$ | $4.2 \times 10^{14}$ | $2.7 \times 10^{13}$ |
| Surface resistivity after water dipping treatment/Initial surface resistivity | | | 5.5 | 4.8 | 16.9 | 14.3 |
| Surface resistivity after water wiping treatment/Initial surface resistivity | | | 1,190 | 16,000 | 140,000 | 275 |

Table 4 (continued)

| | | | Example 18 | Example 19 | Example 20 |
|---|---|---|---|---|---|
| Composition/Parts by mass | Component (A) | A1: Aqueous polyacrylic acid solution | - | - | - |
| | | A2: Aqueous polyacrylic acid solution | - | - | - |
| | | A3: Aqueous acrylic acid-methacrylic acid copolymer solution | - | - | - |
| | | A5: Aqueous acrylic acid-methacrylic acid copolymer solution | 6.9 | 8.7 | 10.4 |
| | Component (B) | B1: Aqueous trimethyloctadecylammonium chloride solution | 18.1 | 18.1 | 18.1 |
| | Component (C) | C1: Aqueous carbodiimide resin solution | 3.3 | 2.4 | 1.6 |
| | Ion-exchange water | | 71.7 | 70.8 | 69.9 |
| Solid content of antistatic agent composition (by calculation) (% by mass) | | | 7.8 | 7.8 | 7.8 |
| Ma/Mb | | | 1.2 | 1.6 | 1.9 |
| (Ma - Mb)/Mc | | | 1.6 | 5.2 | 12.0 |
| Surface resistivity (Ω) | | Initial | $8.8 \times 10^{10}$ | $1.9 \times 10^{11}$ | $1.9 \times 10^{11}$ |
| | | After water dipping treatment | $2.3 \times 10^{12}$ | $9.0 \times 10^{12}$ | $5.4 \times 10^{13}$ |
| | | After water wiping treatment | $2.0 \times 10^{13}$ | $4.4 \times 10^{13}$ | $1.0 \times 10^{14}$ |
| Surface resistivity after water dipping treatment/Initial surface resistivity | | | 26.1 | 47.4 | 284 |
| Surface resistivity after water wiping treatment/Initial surface resistivity | | | 227 | 232 | 526 |

With respect to the plastic materials (plastic optical members) thus obtained, surface resistivity was measured in the following manner and antistatic properties and durability of antistatic properties were evaluated. These results are shown in Tables 1 to 4.

<Method for Measuring Surface Resistivity>

Under the conditions of an applied voltage of 500 V and an application time of one minute, surface resistivity

was measured according to JIS K 6911-1995. With respect to Examples 1 to 9 and Comparative Example 1, initial surface resistivity and surface resistivity after the following water dipping treatment were measured. With respect to Examples 10 to 20, initial surface resistivity, surface resistivity after the following water dipping treatment and surface resistivity after the following water wiping treatment were measured,

<Water Dipping Treatment>

After measuring the initial surface resistivity, each test piece was further dipped in running water at a flow rate of 3 to 4 L/min for 3 to 4 minutes. Each test piece was taken out and dried at 60°C, and then surface resistivity was measured.

<Water Wiping Treatment>

After the measurement of the surface resistivity which follows the water dipping treatment, the surface of each test piece was continuously wiped with a nonwoven fabric impregnated with water for 30 seconds. After drying the test piece at 60°C, surface resistivity was measured.

When the antistatic agent composition of the present invention is coated on the surface of a plastic molded article for example, an antistatic film which antistatic properties having excellent durability against high temperature, high humidity and ultraviolet irradiation can be formed, and thus the antistatic agent composition of the present invention can be widely used to a plastic material (plastic member). For example, the antistatic agent composition can be preferably used to impart antistatic properties to plastic optical members such as light diffusion plate, light guide plate, protective cover of display, brightness enhancing film and liquid crystal display section. The antistatic agent composition is particularly preferably so as to impart antistatic properties to a plastic optical member used for a flat panel display such as liquid crystal display.

## Claims

**1.** An antistatic agent composition comprising:

a water-soluble resin having a carboxyl group,
a crosslinking agent having a functional group capable of reacting with a carboxyl group, and
an ammonium salt represented by the following general formula (I):

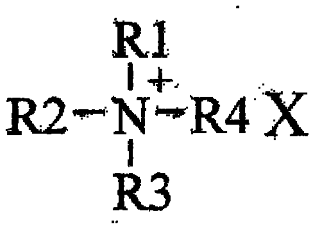

··· (I)

wherein R1 to R4 each independently represents a hydrogen atom, a linear alkyl group having 1 to 22 carbon atoms, a branched alkyl group having 3 to 22 carbon atoms, or $-CH_2Ph$, and $X^-$ represents halide ion, hydroxide ion, sulfate ion, phosphate ion, an ion of the following general formula (II), or an ion of the following general formula (III):

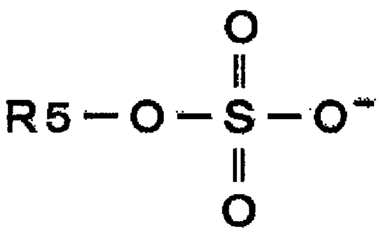

··· (II)

wherein R5 each independently represents a hydrogen atom, a linear alkyl group having 1 to 22 carbon atoms, a

branched alkyl group having 3 to 22 carbon atoms, or $-CH_2Ph$, and

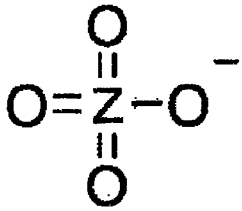

··· (III)

wherein Z represents a halogen.

2. The antistatic agent composition according to claim 1, wherein one or more kinds of crosslinking agents selected from a carbodiimide resin, an epoxy resin, an isocyanate resin and a zirconium salt are used as the crosslinking agent.

3. The antistatic agent composition according to claim 1 or 2, wherein a water-soluble resin obtained by polymerizing a polymerization component containing at least one kind of a monomer component selected from acrylic acid and methacrylic acid, a water-soluble resin modified with a dihydric or higher polyhydric carboxylic acid, or a water-soluble resin modified with a dihydric or higher polyhydric carboxylic anhydride is used as the water-soluble resin.

4. The antistatic agent composition according to claim 1 or 2, wherein at least one kind of a water-soluble resin selected from polyacrylic acid and an acrylic acid-methacrylic acid copolymer is used as the water-soluble resin.

5. The antistatic agent composition according to any one of claims 1 to 4, wherein an ammonium salt represented by the following general formula (IV) is used as the ammonium salt:

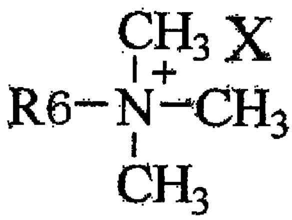

··· (IV)

wherein R6 represents a linear alkyl group having 4 to 22 carbon atoms, a branched alkyl group having 4 to 22 carbon atoms, or $-CH_2Ph$, and $X^-$ represents halide ion.

6. The antistatic agent composition according to any one of claims 1 to 5, wherein the following relational expression is established:

$$Ma/Mb > 1$$

where "Ma" denotes a mol number of a carboxyl group in the water-soluble resin and "Mb" denotes a mol number of the ammonium salt.

7. The antistatic agent composition according to any one of claims 1 to 6, wherein the following relational expression is established:

$$0 \leq (Ma - Mb)/Mc \leq 6$$

where "Ma" denotes mol number of a carboxyl group in the water-soluble resin, "Mb" denotes a mol number of the

ammonium salt, and "Mc" denotes a mol number of a functional group capable of reacting with a carboxyl group in the crosslinking agent.

**8.** A plastic material, the surface of which is coated with the antistatic agent composition according to any one of claims 1 to 7.

**9.** A plastic optical member, the surface of which is coated with the antistatic agent composition according to any one of claims 1 to 7.

**10.** A backlight comprising the plastic optical member according to claim 9.

**11.** An image display apparatus comprising the plastic optical member according to claim 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001152077 A
- US 20060003274 A1